(19) Europäisches Patentamt
European Patent Office
Office européen des brevets

(11) **EP 1 446 867 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: **02802619.3**

(22) Anmeldetag: **04.10.2002**

(51) Int Cl.:
**H02M 1/32** (2007.01)     **H02M 7/5387** (2007.01)

(86) Internationale Anmeldenummer:
**PCT/EP2002/011173**

(87) Internationale Veröffentlichungsnummer:
**WO 2003/041257 (15.05.2003 Gazette 2003/20)**

(54) **UMRICHTER UND VERFAHREN ZUR GENERIERUNG EINES ÜBERSTROMSIGNALS**

CONVERTER AND METHOD FOR GENERATION OF AN OVERLOAD SIGNAL

CONVERTISSEUR ET PROCEDE DE GENERATION D'UN SIGNAL DE SURCHARGE DE COURANT

(84) Benannte Vertragsstaaten:
**AT BE BG CH CY CZ DE DK EE ES FI FR GB GR IE IT LI LU MC NL PT SE SK TR**

(30) Priorität: **08.11.2001 DE 10154479**

(43) Veröffentlichungstag der Anmeldung:
**18.08.2004 Patentblatt 2004/34**

(73) Patentinhaber: **SEW-EURODRIVE GmbH & Co. KG**
**76646 Bruchsal (DE)**

(72) Erfinder:
• **WOLF, Harald**
  **76694 Forst (DE)**
• **HILLENBRAND, Rainer**
  **76646 Bruchsal (DE)**

(56) Entgegenhaltungen:
**US-A- 5 877 950**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Umrichter und ein Verfahren zur Generierung eines Überstromsignals,

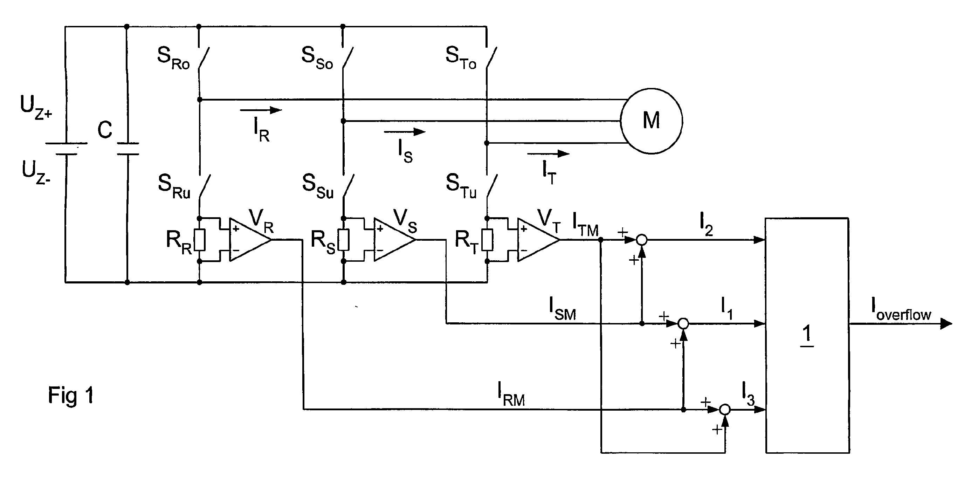

Aus der DE196 81 189 T1 ist ein Umrichter mit Zwischenkreiskondensator (Figur 1, Bezugzeichen 3) und eine mit diesem verbundene Endstufe bekannt, die drei Halbbrücken umfasst und eine potentialgetrennte Stromerfassung umfasst. Die Stromerfassung kommt mit nur einem Stromfühler aus. Nachteilig ist dabei, dass bei bestimmten Winkeln des Ausgangsspannungszeigers der Zwischenkreisstrom die Information über nur einen Phasenstrom enthält. Daher kann ein Generieren eines Überstromsignals, das aus dem Zwlschenkreisstrom erzeugt wird, bei diesen Winkeln nicht alle Phasenströme berücksichtigen. Überschreitet ein unberücksichtigter Phasenstrom bei diesen Winkeln einen kritischen Wert, ist dies mit dem so gewonnenen Überstromsignal nicht erkennbar.

Aus der US 5 877 950 A ist ein Verfahren für einen pulsweitenmoduliert betreibbaren Umrichter, umfassend Signalelektronik und eine Leistungsendstufe, die in drei, jeweils einen unteren und einen oberen Zweig umfassende Halbbrücken angeordnete Leistungsschalter umfasst, wobei in allen drei unteren Zweigen der Halbbrücken Mittel zur Erfassung der jeweiligen Ströme angeordnet sind, wobei nur für zwei Paarungen die Summe der Strom-Messsignale gebildet wird.

Der Erfindung liegt daher die Aufgabe zugrunde, einen Umrichter weiterzubilden, bei dem auf möglichst viele kostspielige Teile verzichtet werden kann und insbesondere bei Massenproduktion eine kostengünstige Herstellung erreichbar ist und trotzdem der Umrichter mit hohem Schutz versehbar ist.

Erfindungsgemäß wird die Aufgabe bei einem Verfahren nach den in Anspruch 1 angegebenen Merkmalen und bei einem Umrichter zur Verwendung bei einem solchen Verfahren nach den in Anspruch 9 angegebenen Merkmalen gelöst.

Wesentliche Merkmale der Erfindung bei dem Verfahren sind, dass das Verfahren zur Generierung eines Oberstromsignals für einen Umrichter eine Leistungsendstufe umfasst, die in Halbbrücken angeordnete Leistungsschalter umfasst, wobei in <u>allen</u> Halbbrücken die jeweiligen Ströme erfasst werden,

- von je zwei Strom-Messwerten die Summe gebildet wird für alle Paarungen,
- der Betrag des Maximums aus diesen Summen bestimmt wird
- der Betrag des Minimums aus diesen Summen bestimmt wird
- bei Überschreiten eines kritischen Wertes durch mindestens einen dieser Beträge ein Überstromsignal generiert wird.

Von Vorteil ist dabei, dass zur Erzeugung des Überstromsignals <u>stets</u> alle drei Phasen berücksichtigt werden. Daher ist immer die Information über die Motorströme in allen drei Phasen vorhanden, auch wenn in einer der drei Phasen ein Pulsweitenmodulations-Signal kürzer als die Mindestdauer im LOW-Zustand ist. Somit ist immer ein sicheres Erkennen eines Überstroms gewährleistet und ein zuverlässiges Generieren eines Überstromsignals gesichert. Außerdem sind möglichst viele kostspieligen Teile verzichtbar, da die Ströme in den Halbbrücken gemessen werden und somit Potentialtrennungen entbehrlich werden. Bei Massenproduktion ist eine kostengünstige Herstellung erreichbar. Des Weiteren sind die beschriebenen Operationen einfach und schnell, insbesondere auch durch Hardware, ausführbar.

Bei bevorzugten Ausführungen werden die Strommesssignale und das Überstromsignal auf dem unteren zwischenkreispotential gebildet, ohne dass potentialtrennende Strommessmittel erforderlich sind. Insbesondere sind kostengünstige Widerstände verwendbar. Des Weiteren entspricht das Bezugspotential der Signalelektronik, die eine Steuer- und Regeleinrichtung des Umrichters umfasst, dem Bezugspotential, auf welchem das Überstromsignal gebildet wird. Von Vorteil ist dabei, dass Optokoppler zur Potentialtrennung des Überstromsignals und der Ansteuersignale einsparbar sind. Nur die Ansteuersignale der oberen Leistungsschalter müssen über Optokoppler oder andere potentialtrennende Vorrichtungen angesteuert werden. Insbesondere bei einem Umrichter, der keine Anschlüsse für einen Geber, wie Drehzahl- oder Positionsgeber, oder für andere potential-abzutrennende Vorrichtungen aufweist, ist somit ein wesentlicher Schritt zur Kosteneinsparung und eine Reduktion der Anzahl der Teile erreichbar.

Dies bewirkt auch eine Reduzierung des Volumens des Umrichters.

Bei einer bevorzugten Ausführung wird der Betrag des Maximums und der Betrag des Minimums kontinuierlich oder quasi-kontinuierlich bestimmt. Von Vorteil ist dabei, dass eine kontinuierliche Überwachung vorhanden ist und somit bei auftretendem Überstrom der Umrichter mittels des Überstromsignals sofort abschaltbar oder in einen sicheren Zustand bringbar ist. Die Erfassung der Ströme ist in analoger und nicht in digitaler Weise kontinuierlich ausführbar. Somit ist der gesamte Vorgang des Erfassens der Messwerte bis zum Generieren eines Überstromsignals extrem schnell ausführbar. Dies ist ein wichtiger Vorteil für den Schutz des Umrichters. Bei analoger Ausführung ist der Umrichter nämlich innerhalb kürzeste Zeiten abschaltbar, insbesondere schneller als 10 $\mu$s. Beispielsweise bringen infolge des Anlegens des Überstromsignals an einen sogenannten Error-Eingang des Mikrocontrollers die Ansteuersignale den Umrichter sehr schnell, z.B. schneller als in 10 $\mu$s, in einen sicheren Zustand. Damit ist ein Kurzschlussschutz ausbildbar.

Bei einer bevorzugten Ausführung wird gemäß dem Überstromsignal der Umrichter in einen sicheren Zustand überführt, insbesondere abgeschaltet. Von Vorteil ist dabei, dass der Umrichter nicht beschädigt wird und schon nach kurzer Zeit, beispielsweise weniger als 10 Millisekunden , in denen der Überstrom unter Umständen abklingt, wieder einschaltbar und betreibbar ist.

Bei einer bevorzugten Ausführung werden gemäß dem Überstromsignal alle Leistungsschalter in den geöffneten Zustand überführt. Von Vorteil ist dabei, dass die Endstufe derart betreibbar ist, dass dem weiteren Anstieg des Stromes entgegengewirkt werden kann.

Wesentliche Merkmale der Erfindung bei dem Umrichter sind, dass der eine Signalelektronik und eine Leistungsendstufe umfasst, die in Halbbrücken angeordnete Leistungsschalter umfasst,

wobei in allen Halbbrücken Mittel zur Stromerfassung angeordnet sind, und wobei

- Mittel zur Bildung der Summe von je zwei Strom-Messwerten für alle Paarungen vorgesehen sind,
- Miltel zur Bildung des Betrages des Maximums aus diesen Summen vorgesehen sind,
- Mittel zur Bildung des Betrages des Minimums aus diesen Summen vorgesehen sind,
- Mittel zur Überwachung auf Überschreiten eines kritischen Wertes durch mindestens einen dieser Beträge und Mittel zur Generierung eines Überstromsignales vorgesehen sind.

Von Vorteil ist dabei, dass die Mittel in analoger Schaltungstechnik ausführbar sind und somit eine sehr schnelle Generierung des Überstromsignals ausführbar ist. Außerdem sind kostspielige potentialtrennende Mittel einsparbar.

Bei einer bevorzugten Ausführung umfassen die Mittel zur Stromerfassung Widerstände, insbesondere Shunt-Widerstände. Von Vorteil ist dabei, dass die Stromerfassung äußerst kostengünstig ist.

Bei einer bevorzugten Ausführung sind die Mittel zur Stromerfassung derart in den Halbbrücken angeordnet, dass sie entweder mit dem oberen oder mit dem unteren Zwischenkreispotential verbunden sind. Von Vorteil ist dabei, dass kostspielige potentialtrennende Mittel einsparbar sind. Denn, wären die Mittel zur Stromerfassung in den Zuleitungen zum Motor vorgesehen, würden kostspielige potentialtrennende Mittel notwendig sein.

Bei einer bevorzugten Ausführung weist die Signalelektronik ein Bezugspotential auf, das auch Bezugspotential für die Mittel zur Stromerfassung ist. Wenn dieses Bezugspotential Uz beträgt, dann sind die Mittel zur Potentialtrennung für die Ansteuersignale der unteren Leistungsschalter der Halbbrücken einsparbar.

Weitere vorteilhafte Ausgestaltungen ergeben sich aus den Unteransprüchen.

**Bezugszeichenliste**

1   Auswerteschaltung

Die Erfindung wird nun anhand von Abbildungen näher erläutert:

In der Figur 1 ist für einen dreiphasigen Umrichter eine Leistungsendstufe schematisch skizziert. Die Leistungsschalter mit zugeordneten Freilaufdioden sind dabei durch sechs Schaltersymbole $S_{Ro}$, $S_{So}$, $S_{To}$, $S_{Ru}$, $S_{Su}$ und $S_{Tu}$ bezeichnet. In den unteren Zweigen der Halbbrücken sind als Mittel zur Stromerfassung Shunt-Widerstände $R_R$, $R_S$ und $R_T$ angeordnet. Diese sind somit mit dem unteren Bezugspotential $U_{Z\_}$ verbunden. Auf dem gleichen Bezugspotential $U_{Z\_}$ werden auch die Strommesssignale gebildet und über Summierer der Auswerteschaltung 1 zugeführt. Die in der Figur 1 nicht dargestellte Signalelektronik des Umrichters, umfassend Steuer- und Regeleinrichtung des Umrichters, kann dasselbe Bezugspotential aufweisen. Die motorseitigen Ausgangspotentiale des Umrichters sind $U_R$, $U_S$ und $U_T$; die Motorströme sind mit $I_R$, $I_S$ und $I_T$ bezeichnet.

Die Widerstände sind mit Verstärkerschaltungen $V_R$, $V_S$ und $V_T$ verbunden, die jeweils ausgangsseitig einen Strommesswert $I_{RM}$, $I_{SM}$ und $I_{TM}$ erzeugen.

Wenn ein Pulsweitenmodulations-Signal sich im LOW-Zustand befindet, fließt der zugehörige Motorstrom im unteren Zweig der zugehörigen Halbbrücke und damit über den Shunt-Widerstand. Die nachgeschalteten Messverstärkerschaltungen, umfassend Verstärkerschaltungen $V_R$, $V_S$ und $V_T$, weisen auch eine Filterwirkung auf. Zur genauen Erfassung des Stromes muss der Shunt-Widerstand länger als eine Mindestdauer von dem Motorstrom durchflossen werden. Andernfalls würde die Filterwirkung das Erfassen korrekter Strommesssignale verhindern. Erst nach der Mindestdauer erreicht das Strommesssignal einen dem tatsächlich fließenden Motorstrom entsprechenden Wert. Die Mindestdauer ist dabei abhängig von der Filterwirkung der Messverstärkerschaltungen.

Diese Strommesssignale werden drei Summierern zugeführt, die für alle Paarungen von Strommesssignalen die Summensignale $I_1$, $I_2$ und $I_3$ erzeugen. Innerhalb einer nachfolgenden Auswerteschaltung 1 wird das Maximum und das Minimum dieser Summensignale $I_1$, $I_2$ und $I_3$ bestimmt. Weiter wird der Betrag dieses Minimums und Maximums bestimmt und daraus der größere Wert bestimmt. Dieser größere Wert wird kontinuierlich überwacht auf Überschreiten eines kritischen Wertes.

Die Auswerteschaltung 1 realisiert also die Formel

$$MAX\big(|\ MAX(I_1, I_2, I_3)\ |, |\ MIN(I_1, I_2, I_3)\ |\big) > W_{KRIT}\ ,$$

wobei $I_1 = I_{RM} + I_{SM}$, $I_2 = I_{SM} + I_{TM}$ und $I_3 = I_{RM} + I_{TM}$ gilt und $W_{KRIT}$ ein kritischer Wert ist.

Wenn die Ungleichung erfüllt ist, wird ein Überstromsignal $I_{Overflow}$ generiert und bei analoger Ausführung ist der Umrichter innerhalb weniger Mikrosekunden in einen sicheren Zustand überführbar, der dem Anstieg des Stromes entgegenwirkt. Dies ist beispielsweise dann der Fall, wenn alle sechs Schalter $S_{Ro}$, $S_{So}$, $S_{To}$, $S_{Ru}$, $S_{Su}$ und $S_{Tu}$ ausgeschaltet werden.

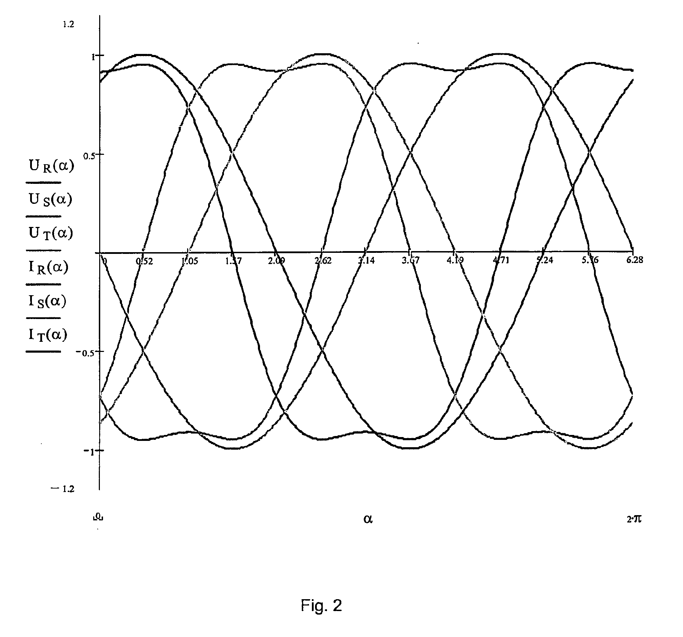

In der Figur 2 sind beispielhafte zeitliche Verläufe der über jeweils eine Pulsweitenmodulations-Periode gemittelten motorseitigen Ausgangspotentiale $U_R$, $U_S$ und $U_T$ des Umrichters und der zugehörigen Motorströme $I_R$, $I_S$ und $I_T$ über eine Ausgangsspannungsperiode gezeigt, wobei die motorseitigen Ausgangspotentiale $U_R$, $U_S$ und $U_T$ normiert sind und der Ausgangsspannungswinkel $\alpha$ sich über den Bereich von 0 bis $2\pi$ erstreckt. Entsprechend der Normierung entspricht der Potentialwert $U_{z-}$ dem Wert -1 und $U_{z+}$ dem Wert +1.

Figur 2 zeigt Verläufe bei einem stationären motorischen Betrieb mit einem Phasenverschiebungswinkel von 30°, entsprechend $\cos(\varphi) = 0{,}87$. In der Figur 2 ist zu erkennen, dass die Mittelwerte der Ausgangspotentiale eine dritte Oberschwingung enthalten.

Bei einem Ausgangsspannungswinkel von $\alpha = \pi/6$ beträgt der Mittelwert des Ausgangspotentials $U_S$ Null. Der Mittelwert des Ausgangspotentials $U_R$ liegt in der Nähe des positiven maximalen Wertes 1. Der Mittelwert des Ausgangspotentials $U_T$ liegt in der Nähe des minimalen Wertes -1. Die Mittelwerte der Ausgangspotentiale erreichen bei diesem Ausgangsspannungswinkel und bei der beispielhaft gewählten Amplitude also fast die Aussteuergrenze des Umrichters.

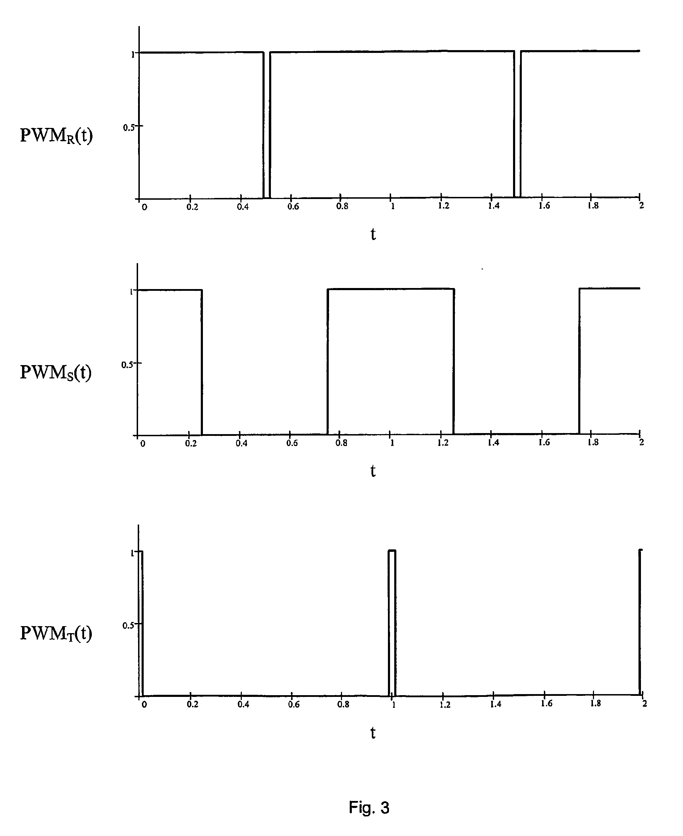

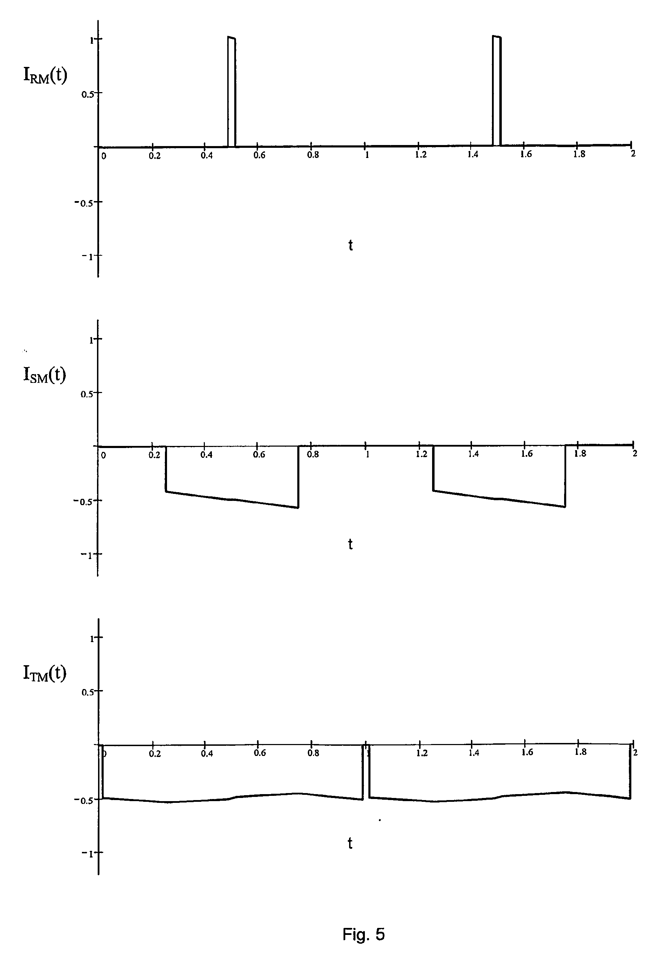

In der Figur 3 sind für die Ausgangspotentiale aus Figur 2 wieder beim Ausgangsspannungswinkel $\alpha = \pi/6$ zugehörige zeitliche Verläufe der Putsweitenmodulations-Signale $PWM_R(t)$, $PWM_S(t)$ und $PWM_T(t)$ skizziert. Aus diesen werden die Ansteuersignale für die Leistungsschalter $S_{Ro}$, $S_{So}$, $S_{To}$, $S_{Ru}$, $S_{Su}$ und $S_{Tu}$ abgeleitet. Wenn das jeweilige Pulsweitenmodulations-Signal, beispielsweise $PWM_R(t)$. 1 beträgt, wird der zugehörige obere Leistungsschalter, also beispielhaft $S_{Ro}$, geschlossen und der zugehörige untere Leistungsschalter, also beispielhaft $S_{Ru}$, geöffnet. In diesem Fall beträgt das zugehörige Ausgangsspannungspotential $U_R = U_{Z-}$. Beträgt das Pulsweitenmodulations-Signal 0 gehen die zugehörigen Leistungsschalter in den jeweils anderen Zustand und das zugehörige Ausgangsspannungspotential beträgt $U_{Z-}$. Die in der praktischen Realisierung eingefügte sogenannte Totzeit, während der der jeweils obere und untere Schalter offen ist, ist für die Funktion der Erfindung prinzipiell nicht relevant. In der Figur 5 sind in Abszissenrichtung zwei Pulsweitenmodulationsperioden gezeigt.

Das über eine Pulsweitenmodulationsperiode gemittelte Ausgangsspannungspotential $U_S = 0$ wird gemäß Figur 3 durch ein $PWM_S(t)$- Signal erreicht, das zu 50% der Pulsweitenmodulationsperiode 1 ist und zu 50% der Pulsweitenmodulationsperiode 0 ist. Die Putsweitenmodulations-Verhältnisse der anderen Pulsweitenmodulations-Signale $PWM_R(t)$ und $PWM_T(t)$ sind entsprechend deren über eine Pulsweitenmodulationsperiode gemittelte Ausgangsspannungspotential verteilt.

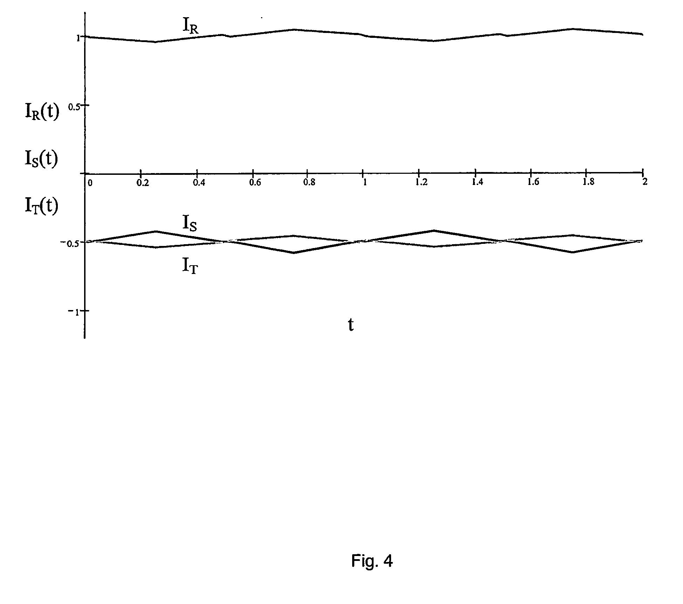

In der Figur 4 sind die zu den beiden genannten Pulsweitenmodulations-Perioden zugehörigen Motorströme $I_R(t)$, $I_S(t)$ und $I_T(t)$ in den Ausgangszweigen gezeigt. Figur 4 entspricht also einer starken zeitlichen Dehnung des Verlaufes der Motorströme aus Figur 2 beim Ausgangsspannungswinkel $\alpha = \pi/6$. Außerdem ist die aufgrund der pulsweitenmodulierten Ausgangspotentiale resultierende Stromwelligkeit angedeutet.

In der Figur 5 ist der zu den beiden genannten Pulsweitenmodulations-Perioden zugehörige zeitliche Verlauf der Strommesssignale $I_{RM}(t)$, $I_{SM}(t)$ und $I_{TM}(t)$ gezeigt. Ein von Null abweichender Strommesswert kann sich immer nur dann ergeben, wenn das Pulsweitenmodulations-Signal der zugehörigen Halbbrücke Null ist; d.h., der untere Schalter geschlossen ist. Ist der obere Schalter geschlossen, fließt nämlich der Motorstrom nicht über den Shunt-Widerstand der Halbbrücke, so dass während dieser Zeit der Strommesssignale Null ist. Die Strommesssignale repräsentieren also nicht kontinuierlich die Motorströme sondern sie repräsentieren diese lediglich in denjenigen Zeitabschnitten, in welchen die Pulsweitenmodulations-Signalen $PWM_R(t)$, $PWM_S(t)$ und $PWM_T(t)$ Null sind. Bei dem gezeigten Verlauf weist $I_{RM}(t)$ das betragsmäßig größte Strommesssignal auf, allerdings nur während eines sehr kurzen Zeitabschnittes. Bei Vollaussteuerung der Ausgangsspannung würde dieser Zeitabschnitt sogar gänzlich verschwinden.

Wenn einer der Motorströme einen kritischen Wert überschreitet, soll ein Überstromsignal generiert werden, um den Umrichter in einen sicheren Zustand zu überführen, beispielsweise ihn abzuschalten. Aus Figur 5 ist ersichtlich, dass das Erkennen eines einen kritischen Wert $W_{KRIT}$ überschreitenden Motorstromes in einer Phase anhand des Messsignales dieser Phase bei bestimmten Betriebszuständen zeitweise versagt; nämlich gerade dann, wenn das zu dieser Phase gehörende Pulsweitenmodulations-Signal nicht länger als die Mindestdauer im LOW-Zustand ist.

Bei anderen erfindungsgemäßen Ausführungsbeispielen sind auch andere als das vorliegende symmetrische Pulsweitenmodulationsverfahren vorteilhaft verwendbar. Die Art des Pulsweitenmodulationsverfahrens hat Einfluss auf die Dauer der Zeitabschnitte, während deren die Strommesswerte von Null verschieden sind.

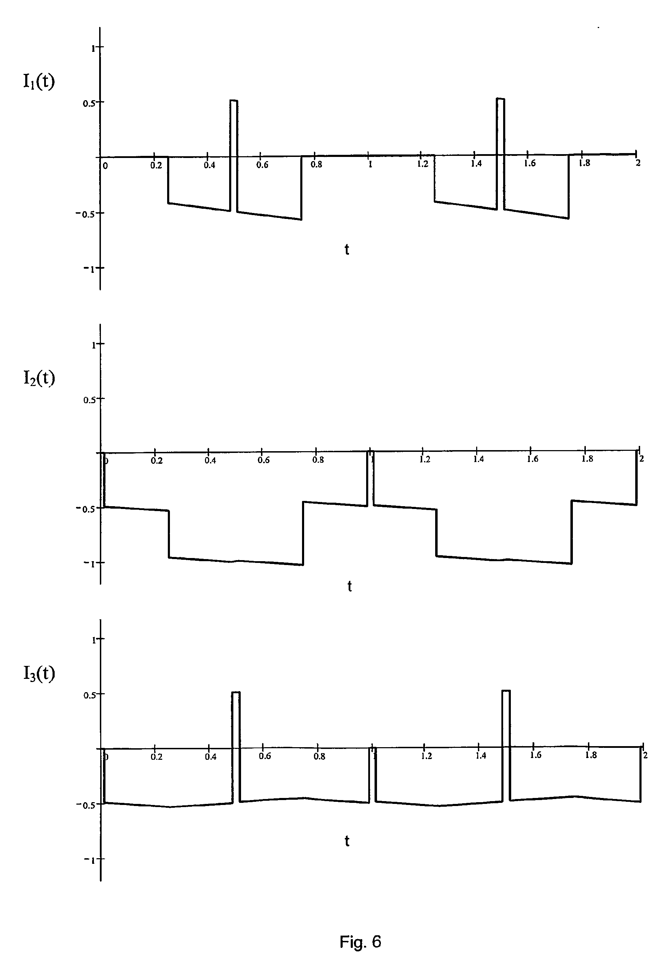

Mittels der Summierer werden für alle möglichen Paarungen von Strommesssignale die in der Figur 6 gezeigten zeitlichen Verläufe der Summensignale $I_1(t)$, $I_2(t)$ und $I_3(t)$ erzeugt. Die Auswerteschaltung 1 bestimmt aus diesen Summansignalen $I_1(t)$, $I_2(t)$ und $I_3(t)$ den Innerhalb einer Pulsweltenmoduistions-Periode auftretenden, betragsmäßig größten Wert und vergleicht diesen mit dem kritischen Wert $W_{KRIT}$. Wird dieser kritische Wert $W_{KRIT}$ überschritten, wird das Überstromssignal $I_{Overflow}$ generiert.

Bei der Summenbildung entsteht je nach Pulsweitenmodulations-Signal der beiden zur Summenbildung herangezogenen Phasen ein Summensignal, welches dem Motorstrom der einen beteiligten Phase, der anderen beteiligten Phase oder der Summe dieser beiden beteiligten Motorströme entspricht oder Null ist.

Dabei ist zu beachten, dass die Summe zweier Motorströme das Negative des dritten Motorstromes beträgt. Bei der Summenbildung entstehen also keine Summensignale, die betragsmäßig größer sind als irgendeiner der Motorströme.

Bei der hier verwendeten Pulsweitenmodulations-Verfahren treten stets Pulsmuster auf, bei denen in maximal einem Ausgangszweig ein solches Pulsweitenmodulations-Signal auftritt, dessen LOW-Zustand kürzer als die Mindestdauer währt. D.h., dass niemals in zwei Phasen gleichzeitig für weniger als die Mindestdauer beide Pulsweitenmodulations-Signale im LOW-Zustand sind.

Für den Fall, dass der LOW-Zustand eines der Pulsweitenmodulations-Signale, beispielsweise $PWM_R(t)$, die Mindestdauer unterschreitet, ist trotzdem sicher gestellt, dass ein in eben dieser Phase auftretender Überstrom zu einem Überstromsignal führt. Denn die beiden anderen Pulsweitenmodulations-Signale, im Beispiel also $PWM_S(t)$ und $PWM_T(t)$, unterschreiten die Mindestdauer nicht. Die Summe der beiden entsprechenden Strommesssignale, also das Summensignal $I_2$, stimmt betragsmäßig mit dem Motorstrom der R-Phase überein, solange die beiden anderen Pulsweitenmodulations-Signale, im Beispiel also $PWM_S(t)$ und $PWM_T(t)$, gleichzeitig im LOW-Zustand sind.

Bei dem vorliegenden erfindungsgemäßen Ausführungsbeispiel wird ein symmetrisches Pulsweitenmodulations-Verfahren verwendet. Bei anderen erfindungsgemäßen Ausführungsbeispielen sind auch andere Pulsweitenmodulations-Verfahren vorteilhaft verwendbar.

Somit ist bei der vorliegenden Erfindung immer ein Ansprechen der Überstromsignalerzeugung gewährleistet, sofern bei der jeweiligen Art der Pulsweitenmodulations-Modulation sicher gestellt ist, dass immer nur maximal ein Pulsweitenmodulations-Signal kürzer als die Mindestdauer im LOW-Zustand ist.

**Patentansprüche**

1. Verfahren zur Generierung eines Oberstromsignals
   für einen pulsweitenmoduliert betreibbaren Umrichter, umfassend Signalelektronik und eine Leistungsendstufe, die In drei, jeweils einen unteren und einen oberen Zweig umfassende halbbrücken angeordnete Leistungsschalter ($S_{Ro}$, $S_{So}$, $S_{To}$, $S_{Ru}$, $S_{Su}$, $S_{Tu}$) umfasst.
   **dadurch gekennzeichnet, dass**

   - entweder in **allen drei unteren oder in allen drei oberen** Zweigen der Halbbrücken Mittel ($I_R$, $I_S$, $I_T$) zur Erfassung der jeweiligen Ströme ($R_R$, $R_S$, $R_T$) angeordnet sind,
   - von je zwei Strom-Messsignale die Summe ($I_1$, $I_2$, $I_3$) gebitdet wird für alle Paarungen,
   - der Betrag des Maximums aus diesen Summen bestimmt wird,
   - der Betrag des Minimums aus diesen Summen bestimmt wird und
   - bei Überschreiten eines kritischen Wertes durch mindestens einen dieser Beträge ein Überstromsignal ($I_{Overflow}$) generiert wird.

2. Verfahren nach Anspruch 1,
   **dadurch gekennzeichnet, dass**
   der Betrag des Maximums und der Betrag des Minimums kontinuierlich oder quasi-kontinuierlich bestimmt wird.

3. Verfahren nach mindestens einem der vorangegangenen Ansprüche,
   **dadurch gekennzeichnet, dass**
   die Strommesssignale auf dem unteren oder oberen Zwischenkreispotential erfasst werden.

4. Verfahren nach mindestens einem der vorangegangenen Ansprüche,
   **dadurch gekennzeichnet, dass**
   das Überstromsignal auf demjenigen Bezugspotential generiert wird, auf welchem die Strommesssignale erfasst werden.

**5.** Verfahren nach mindestens einem der vorangegangenen Ansprüche,
**dadurch gekennzeichnet, dass**
ein Bezugspotential der Signalelektronik einem Bezugspotential entspricht, auf welchem die Strommesssignale erfasst werden und das Überstromsignal generiert wird.

**6.** Verfahren nach mindestens einem der vorangegangenen Ansprüche,
**dadurch gekennzeichnet, dass**
gemäß dem Überstromsignal der Umrichter in einen sicheren Zustand überführt wird.

**7.** Verfahren nach mindestens einem der vorangegangenen Ansprüche,
**dadurch gekennzeichnet, dass**
gemäß dem Überstromeignal der Umrichter abgeschaltet wird.

**8.** Verfahren nach mindestens einem der vorangegangenen Ansprüche,
**dadurch gekennzeichnet, dass**
gemäß dem Überstromsignal alle Leistungsschalter in den geöffneten Zustand überführt werden.

**9.** Umrichter, umfassend eine Signalelektronik und eine Leistungsendstufe, die in Halbbrücken angeordnete Leistungsschalter ($S_{Ro}$, $S_{So}$, $S_{To}$, $S_{Ru}$, $S_{Ru}$, $S_{Tu}$) umfasst,
**wobei**

- entweder in **<u>allen drei unteren oder In allen drei oberen</u>** Zweigen der Halbbrücken ittel ($I_R$, $I_S$, $I_T$) zur Erfassung der jeweiligen Ströme ($R_R$, $R_S$, $R_T$) angeordnet sind,
- Mittel zur Bildung der Summen ($I_1$, $I_2$, $I_3$) on je zwei Strom-Messwerten für alle Paarungen vorgesehen sind,
- Mittel (1) zur Bildung des Betrages des Maximums aus diesen Summen vorgesehen (1) sind,
- Mittel (1) zur Bildung des Betrages des Minimums aus diesen Summen vorgesehen sind und
- Mittel zur Überwachung auf Überschreiten eines kritischen Wertes durch mindestens einen dieser Beträge und Mittel zur Generierung eines Überstromsignales vorgesehen sind.

**10.** Umrichter nach Anspruch 9,
**dadurch gekennzeichnet, dass**
die Mittel zur Stromerfassung Widerstände, insbesondere Shunt-Widerstände, umfassen.

**11.** Umrichter nach einem der Ansprüche 9 bis 10,
**dadurch gekennzeichnet, dass**
die Mittel zur Stromerfassung derart in den Halbbrücken angeordnet sind, dass sie entweder mit dem oberen oder mit dem unteren Zwischenkrelspotantlal verbunden sind.

**12.** Umrichter nach einem der Ansprüche 9 bis 11,
**dadurch gekennzeichnet, dass**
die Signalelektronik Mittel zur Erzeugung pulsweffenmodullerter Steuersignale für die Leistungsschalter umfasst.

**13.** Umrichter nach einem der Ansprüche 9 bis 12,
**dadurch gekennzeichnet, dass**
die Signalelektronik ein Bezugspotential aufweist, das auch Bezugspotential für die Mittel zur Stromerfassung ist.


**Claims**

**1.** Method for generating an overcurrent signal
for a converter, which can be operated by pulse width modulation, comprising signal electronics and a power output stage which comprises power switches ($S_{Ro}$, $S_{So}$, $S_{To}$, $S_{Ru}$, $S_{Su}$, $S_{Tu}$) arranged in three half-bridges, each comprising a lower and an upper branch,
**characterised in that**

- means ($R_R$, $R_S$, $R_T$) for detecting the respective currents ($I_R$, $I_S$, $I_T$) are arranged either in <u>all three lower or in all three upper</u> branches of the half-bridges,
- the sum ($I_1$, $I_2$, $I_3$) of in each case two current-measurement signals is obtained for all pairings,

- the magnitude of the maximum is determined from these sums,
- the magnitude of the minimum is determined from these sums, and
- if a critical value is exceeded by at least one of these magnitudes, an overcurrent signal ($I_{overflow}$) is generated.

2. Method according to Claim 1,
**characterised in that**
the magnitude of the maximum and the magnitude of the minimum is determined continuously or quasi-continuously.

3. Method according to at least one of the preceding claims,
**characterised in that**
the current-measurement signals at the lower or upper intermediate-circuit potential are detected.

4. Method according to at least one of the preceding claims,
**characterised in that**
the overcurrent signal is generated at that reference potential at which the current-measurement signals are detected.

5. Method according to at least one of the preceding claims,
**characterised in that**
a reference potential of the signal electronics corresponds to a reference potential at which the current-measurement signals are detected and the overcurrent signal is generated.

6. Method according to at least one of the preceding claims,
**characterised in that**
the converter is changed into a safe state according to the overcurrent signal.

7. Method according to at least one of the preceding claims,
**characterised in that**
the converter is switched off according to the overcurrent signal.

8. Method according to at least one of the preceding claims,
**characterised in that**
all the power switches are changed into the opened state according to the overcurrent signal.

9. Converter, comprising signal electronics and a power output stage which comprises power switches ($S_{Ro}$, $S_{So}$, $S_{To}$, $S_{Ru}$, $S_{Su}$, $S_{Tu}$) arranged in half-bridges,
**wherein**

- means ($R_R$, $R_S$, $R_T$) for detecting the respective currents ($I_R$, $I_S$, $I_T$) are arranged either in <u>all three lower or in all three upper</u> branches of the half-bridges,
- means for obtaining the sums ($I_1$, $I_2$, $I_3$) of in each case two current-measurement values for all pairings are provided,
- means (1) for obtaining the magnitude of the maximum from these sums are provided, and
- means (1) for obtaining the magnitude of the minimum from these sums are provided, and
- means for monitoring if a critical value is exceeded by at least one of these magnitudes and means for generating an overcurrent signal are provided.

10. Converter according to Claim 9,
**characterised in that**
the means for current detection comprise resistors, in particular shunt resistors.

11. Converter according to one of Claims 9 to 10,
**characterised in that**
the means for current detection are arranged in the half-bridges in such a manner that they are connected either to the upper or to the lower intermediate-circuit potential.

12. Converter according to one of Claims 9 to 11,
**characterised in that**
the signal electronics comprise means for generating pulse width modulated control signals for the power switches.

**13.** Converter according to one of Claims 9 to 12,
**characterised in that**
the signal electronics have a reference potential which is also a reference potential for the means for current detection.

**Revendications**

**1.** Procédé de génération d'un signal de surintensité
pour un variateur de vitesse pouvant fonctionner par modulation de largeur d'impulsion, comprenant une électronique de signal et un étage final de puissance qui comprend des commutateurs de puissance ($S_{Ro}$, $S_{So}$, $S_{To}$, $S_{Ru}$, $S_{Su}$, $S_{Tu}$) disposés en trois demi-ponts comprenant chacun une branche inférieure et une branche supérieure,
**caractérisé en ce que**

- des moyens ($R_R$, $R_S$, $R_T$) pour détecter les courants respectifs ($I_R$, $I_S$, $I_T$) sont disposés soit dans toutes les trois branches inférieures, soit dans toutes les trois branches supérieures des demi-ponts,
- la somme ($I_1$, $I_2$, $I_3$) de chaque fois deux signaux de mesure de courant est formée pour tous les appariements,
- le montant du maximum de ces sommes est déterminé,
- le montant du minimum de ces sommes est déterminé et
- un signal de surintensité ($I_{overflow}$) est généré en cas de dépassement d'une valeur critique par au moins un de ces montants.

**2.** Procédé selon la revendication 1,
**caractérisé en ce que**
le montant du maximum et le montant du minimum sont déterminés continuellement ou quasi continuellement.

**3.** Procédé selon au moins une des revendications précédentes,
**caractérisé en ce que**
les signaux de mesure de courant sont détectés sur le potentiel de circuit intermédiaire inférieur ou supérieur.

**4.** Procédé selon au moins une des revendications précédentes,
**caractérisé en ce que**
le signal de surintensité est généré sur le potentiel de référence sur lequel les signaux de mesure de courant sont détectés.

**5.** Procédé selon au moins une des revendications précédentes,
**caractérisé en ce que**
un potentiel de référence de l'électronique de signal correspond à un potentiel de référence sur lequel les signaux de mesure de courant sont détectés et le signal de surintensité est généré.

**6.** Procédé selon au moins une des revendications précédentes,
**caractérisé en ce que**
le variateur de vitesse est mis dans un état sécurisé en fonction du signal de surintensité.

**7.** Procédé selon au moins une des revendications précédentes,
**caractérisé en ce que**
le variateur de vitesse est mis hors tension en fonction du signal de surintensité.

**8.** Procédé selon au moins une des revendications précédentes,
**caractérisé en ce que**
tous les commutateurs de puissance sont mis dans l'état ouvert en fonction du signal de surintensité.

**9.** Variateur de vitesse, comprenant une électronique de signal et un étage final de puissance qui comprend des commutateurs de puissance ($S_{Ro}$, $S_{So}$, $S_{To}$, $S_{Ru}$, $S_{Su}$, $S_{Tu}$) disposés en demi-ponts,
**dans lequel**

- des moyens ($R_R$, $R_S$, $R_T$) pour détecter les courants respectifs ($I_R$, $I_S$, $I_T$) sont disposés soit dans toutes les trois branches inférieures, soit dans toutes les trois branches supérieures des demi-ponts,
- des moyens pour former les sommes ($I_1$, $I_2$, $I_3$) de chaque fois deux valeurs de mesure de courant pour tous les appariements sont prévus,

- des moyens (1) pour former le montant du maximum de ces sommes sont prévus,

- des moyens (1) pour former le montant du minimum de ces sommes sont prévus et

- des moyens pour surveiller le dépassement d'une valeur critique par au moins un de ces montants et des moyens pour générer un signal de surintensité sont prévus.

10. Variateur de vitesse selon la revendication 9,
**caractérisé en ce que**
les moyens de détection de courant comprennent des résistances, en particulier des résistances de shunt.

11. Variateur de vitesse selon une des revendications 9 à 10,
**caractérisé en ce que**
les moyens de détection de courant sont disposés dans les demi-ponts de manière à être reliés soit au potentiel de circuit intermédiaire supérieur, soit au potentiel de circuit intermédiaire inférieur.

12. Variateur de vitesse selon une des revendications 9 à 11,
**caractérisé en ce que**
l'électronique de signal comprend des moyens pour générer des signaux de commande modulés en largeur d'impulsion pour les commutateurs de puissance.

13. Variateur de vitesse selon une des revendications 9 à 12,
**caractérisé en ce que**
l'électronique de signal présente un potentiel de référence qui est aussi le potentiel de référence pour les moyens de détection de courant.

Fig 1

Fig. 2

Fig. 3

$I_R(t)$

$I_S(t)$

$I_T(t)$

Fig. 4

Fig. 5

Fig. 6

**IN DER BESCHREIBUNG AUFGEFÜHRTE DOKUMENTE**

**In der Beschreibung aufgeführte Patentdokumente**

- DE 19681189 T1
- US 5877950 A